# EUROPEAN PATENT SPECIFICATION

(11) **EP 0 786 506 B1**
(45) Date of publication and mention of the grant of the patent: **23.04.2003**
(21) Application number: 97300226.4
(22) Date of filing: 15.01.1997
(51) Int. Cl.: C09K 3/14, B24D 3/14

(54) **Coated abrasives for abrasive tools**
Beschichtete Schleifmittel für abrasive Werkzeuge
Abrasifs revêtus pour outils abrasifs

(30) Priority: 26.01.1996 US 592091
(43) Date of publication of application: 30.07.1997
(73) Proprietor: GENERAL ELECTRIC COMPANY, Schenectady, NY 12345 (US)
(72) Inventor: Karas, Bradley Ross, Westerville, Ohio 43081-2775 (US); Riehle, Daniel Richard, Powell, Ohio 43065 (US)
(74) Representative: Goode, Ian Roy

(56) References cited:
- EP-A- 0 467 404
- WO-A-90/05170
- US-A- 5 232 469
- US-A- 5 250 086
- US-A- 5 306 318

## Description

This invention relates to coated abrasives for abrasive tools or similar tools, particularly grinding wheels, in order to improve their grinding efficiency. The grinding wheels or similar tools generally are comprised of abrasive particles bonded by a resin matrix material and wherein the abrasive particles have a particular metal coating thereon to promote retention of the abrasive particles within the resin matrix. The abrasive particles include cubic boron nitride (hereinafter CBN) or diamond or similar abrasive materials used in grinding wheels or other similar tools.

It is well known in the art that a coating of nickel or titanium on CBN abrasive particles, for example, or such other abrasive particles improves their retention in the resin matrices of abrasive tools such as grinding wheels. Loss of the coated particles typically results from (a) separation of the particle from the coating and (b) separation of the coated particles from the matrix. Loss of abrasive particles which have become worn and rounded is necessary so that the abrasive tool remains sharp with the exposure of new abrasive articles, otherwise the tool will become ineffective.

Titanium coatings are typically applied to CBN abrasive particles by conventional salt bath techniques, such as is described in U.S. Pat. No. 2,746,888. An alternative procedure is described in U.S. Pat. No. 4,399,167, wherein a mixture of CBN abrasive particles and titanium powder are heat treated. Both procedures provide a thin titanium coating which is believed to be chemically bonded to the CBN abrasive.

US-A-5,232,469 and US-A-5,306,318 disclose the coating of diamond and CBN abrasive particles, respectively, with a primary layer of metal, and a secondary layer of nickel/phosphorus or cobalt/phosphorus.

Nickel coatings are typically applied to the CBN abrasive particles in thick layers of up to 70 weight percent of the total weight of the abrasive particle and coating by electrolytic deposition, electroless deposition and/or vapor deposition techniques. While these coated CBN abrasive particles have provided good performance in tools such as grinding wheels,the loss of the CBN abrasive particles may be considered premature. Improvements in particle retention are desired without detracting from the cutting performance of the abrasive tool.

According to the present invention, there is provided an abrasive composition suitable for use in abrasive tools comprised of abrasive particles having physically adhered to the surface thereof at least a single metal layer coating of a co-deposited metal composition of nickel-cobalt-phosphorus.

This invention is directed to a novel coating for abrasive particles such as CBN, diamond or other similar abrasives used in abrasive tools. The preferred abrasive is CBN and this invention shall be described in terms of the CBN abrasive particles, but is applicable to the other abrasive particles such as diamond and other similar abrasive particles. Wherever CBN is mentioned, it is intended to include the other particles since CBN is employed to illustrate this invention.

The invention provides abrasive particles coated with a strongly adherent coating that aids in the retention of the abrasive particle in the grinding or abrasive tool.

These and other features and advantages will become apparent from the detailed description of this invention.

The co-deposited metal composition comprises at least a single layer. It has been found that this co-deposited metal layer, even as a single layer, greatly enhances the performance of an abrasive tool.

The CBN abrasive particles utilized in the practice of this invention are of a size conventionally used in grinding wheels such as, for example, those about 72-90µm (170/200 U.S. mesh size), but can be other mesh sizes employed in grinding wheels or other abrasive tools. Such sizes may be, for example, about 150-180 µm to about 37-42µm (80/100 to 325/400 U.S. mesh size) or such other mesh sizes commonly used in abrasive tools particularly grinding wheels. The size of such abrasive particles can vary widely within the range of 1 to 1000 microns. The abrasive particles selected should be of sufficient size so that they will provide a cutting profile and not be excessively diluted by the metal coatings to be applied, which can otherwise hinder the performance of the tools made therefrom.

The CBN abrasive particles used in this invention are typically obtained by conversion of hexagonal boron nitride under high pressure and temperature, either with or without a catalyst, such as described in U.S. Pat. Nos. 4,289,503, 2,947,617, 4,188,194 arid 3,212,852. Suitable forms of hexagonal boron nitride include pyrolytic boron nitride and graphitic boron nitride. Included within the term "cubic boron nitride," are nitrides having the Wurtzitic structure (WCN), which is a compact hexagonal structure.

It is preferable to utilize CBN abrasive particles of a size directly obtained from a conversion process. However, the particles utilized in the present invention can also be obtained from larger sized materials which are milled or pulverized by conventional techniques to the size desired. The CBN abrasive particles used can also be in the form of aggregates obtained by sintering metal coated CBN fines into a large mass and pulverizing this mass to obtain aggregates of a desired size.

The single layer metal compositions of the invention are comprised of at least a single layer of a co-deposited metal composition. While such a single layer is preferred, the co- deposited layer may be further coated with metal compositions which may comprise at least one additional layer over the co-deposited layer.

The CBN particles employed in the practice of this invention may be also comprised of crystal shapes whose idealized forms are tetrahedral, preferably truncated tetrahedra. Another form of CBN crystals may be also truncated tetrahedra with a proportion of the crystals having higher-order faces, i.e., beveled edges. Yet another form of CBN particles may be comprised of truncated tetrahedra where twinning is common leading to higher-order faces on the edges.

Also included within the scope of this invention are diamond abrasive particles. The structures of diamond and CBN crystals are similar in that they are both strongly bonded covalently with tetrahedral bonding, but are dissimilar in that diamond has a center of symmetry, whereas CBN does not. Crystals of each can be described and distinguished by a simple crystallographic system called the Morphology Index.

Also included within the scope of this invention are other abrasive particles providing they can meet the criteria of this invention. By this it is meant that the abrasive particles can be coated with the metal compositions of this invention and that they provide improved abrasive tool performance. Such other abrasive particles can include aluminum oxide, silicon carbide and other similar known abrasive particles.

The co-deposited metal layer composition of this invention is generally applied by the electroless deposition process, as described, for example in Kirk-Othmer, Encyclopedia of Chemical Technology, Vol.15, pp. 241-274 (1981). Preferably, these techniques are performed under conditions which allow thick metal layers to form. Where desired, secondary layers may be applied by LPCVD or salt bath deposition techniques.

With respect to the multilayer composite coating, suitable metals used for the layer overcoating the first layer include nickel, cobalt, alloys thereof and the borides, nitrides, carbides, phosphides, and oxides thereof. Of the above metals, nickel and cobalt are preferred and are typically deposited by electroless coating techniques with a nickel or colbalt hypophosphite solution at temperatures of less than about 121°C (250°F), which deposits a small percentage of phosphorus. Also suitable in the multilayer composite coating for the other metal composition layers is a co-deposited layer from a cobalt/nickel/hypophosphite solution, which also deposits a small percentage of: phosphorus resulting in a co-deposited metal layer of cobalt-nickel-phosphorus. A suitable electroless deposition process is described in U.S. Pat. No. 3,50,839.

As stated previously, the abrasive materials may be diamond, CBN or other similar abrasive materials. The coating layer in the layer composite, particularly the first coating layer, must be such that the crystal structure can withstand the temperature of application of the coating layer to the crystal substrate without the crystal losing structural strength. Thus, the crystal structure must withstand the temperature of application without crystal structure deterioration which, in turn, affects the grinding properties.

The at least single co-deposited layer applied to CBN abrasive particles typically comprise the metal layer coatings as set forth above. The metal coating is applied in an amount equivalent to about 30-95 weight percent of the total weight of the CBN abrasive particles and coating. Preferred levels fall within the range of about 60-80 weight percent of total weight of CBN abrasive particles and coatings. The coating thickness is preferably in excess of 5µm for CBN abrasive particles of size greater than about 35 µm. Thick coatings are desired to provide a rough textured surface for improved adhesion to the resin matrix. Amounts of metal coating larger than about 95 weight percent of the combined weight of abrasive particles and coating can provide improved retention of the abrasive particles within an abrasive tool but may dilute the abrasive excessively and reduce cutting performance. Amounts of metal coating smaller than about 30 weight percent of the combined weight can be useful for large particles where the coating thickness is greater than 5µm, but CBN abrasive particles so coated may not show all the advantages of the present invention.

In controlling the resulting abrasive particle retention, lubrication and heat diffusion characteristics of an abrasive tool, the thickness of the metal coating may be varied, the type of metal coatings may be varied and the size of the abrasive particles may be varied. One of ordinary skill in the art can determine the preferred metal coatings, granule sizes and coating thicknesses for the tool intended by routine investigation.

In the application of a metal or metal alloy layer as the at least single co-deposited layer, the process employed may be such that more than one layer of the same metal composition may be applied wherein the layer comprising the same metal composition (metal or metal alloy) would consist of a series of layers. If the composition of the layer is of the same metal composition, i.e., pure metal or metal alloy, it shall be considered as a single layer for the purposes of this invention.

As stated previously, the abrasive particle substrate employed must be such that it can withstand the temperature of the application of at least the first metal composition layer without losing crystal structure strength or deterioration. Thus, CBN abrasive particles due to their crystal structure can suitably use a co-deposited nickel-cobalt-phosphorus alloy layer as at least the first metal composition layer to be applied to the abrasive particle substrate.

After the CBN abrasive particles are coated with the coating compositions of this invention, they may be used to form an abrasive tool, such as a grinding wheel, by impregnating the coated particles within a suitable resin matrix. Impregnating the coated CBN abrasive particles within a resin matrix can be performed by conventional techniques, such as are described by Takahashi in U.S. Pat. No. 4,671,021. The coated particles are typically combined with a phenolic resin to form a mixture, which is shaped as desired within a mold. The phenolic resin is subsequently cured at elevated temperatures to bind the coated particles in a solid matrix to form a solid aggregate of high tensile strength. A preferred tool is a grinding wheel having CBN abrasive particles of a conventional size, such as, for example, about 72-90µm (170/200 mesh size) particle distribution, which are coated with the coating composition of this invention as described above and bound by a phenolic resin.

The abrasive tools provided by this invention can be of any form or shape which is conventional for tools which incorporate CBN abrasive particles. Conventional dies and molds can be utilized to form these tools. The preferred tools are grinding wheels used to grind metals. Such abrasive tools show improved wear, lubricating and heat diffusion characteristics in use as compared to grinding wheels made without CBN abrasive particles without the coating composition of this invention.

The following preferred specific embodiments are to be construed as merely illustrative, and not limitative of the remainder of the disclosure in any way whatsoever.

### EXAMPLE

Cubic boron nitride abrasive particles having the structure described in the Table set forth below are coated with a co-deposited single layer of colbalt-nickel-phosphorus, the method of coating being electroless deposition. The weight percent of the coatings were usually about 65 to 70 percent of the combined weight of abrasive particles and coating with a phosphorus content between 2 and 11 percent thereof.

The coated CBN abrasive particles were then mixed with a conventional phenolic resin (phenol/formaldehyde resin) in a conventional weight ratio used for binding abrasives in a grinding wheel. The mixture was then molded into a grinding wheel of 7 mm width and 150 mm diameter by conventional techniques as described by Takahashi et al. U.S. Pat. No. 4,671,021.

In the Table, the compositions recited therein have a number following the particular metal layer which number is the weight of the metal coating based on the combined weight of crystal and metal at that point with the final number being the weight percent of total metal coating based on the combined weight of abrasive particles and coating.

The relative grinding ratio (grinding efficiency) and relative power are relative to the Control, with each Control having the relative ratio of 100.

In the Table, the following nomenclature applies:
- Ni-P-: - nickel-phosphorus
- Co-Ni-P: - cobalt-nickel-phosphorus
co-deposited

### TEST OF RELATIVE GRINDING PERFORMANCE

The grinding performance of the grinding wheels produced in the Example is reported in the Table. The wheels were tested for grinding performance with a sample SKH 51 (HRc63) tool steel work piece on a reciprocating grinding table. The wheel speed was 30 m/sec. The table was reciprocated at a speed of 15 m/min and the down-feed rate was 0.025 mm. The grinding ratio (wheel loss/work-piece loss) was determined for each wheel after a predetermined period of grinding, typically more than 5 minutes. Wheels with a higher grinding ratio provided superior (lower) wear rates.

**Table**

| Wet Grinding Performance - 140/170 Mesh* | | | |
|---|---|---|---|
| Sample | Coating Layers | G Ratio | Relative G |
| Control | NiP 60 | 430 | 100 |
| Invention | Co-Ni-P Co-deposit | 577 | 134 |

| | | | |
|---|---|---|---|
| * Crystals - CBN crystals comprised of truncated tetrahedra where twinning is common leading to higher order faces on the edges. Wet Grinding - Multi-step grinding on M-4 steel depth of cut 0.025mm (0.001 inches) | | | |

As seen from the Table, the abrasive compositions of the invention having the single co-deposited nickel-cobalt-phosphorus metal layer has significant improvement in grinding efficiency as shown by the G Ratio and Relative G.

## Claims

1. An abrasive composition suitable for use in abrasive tools comprised of abrasive particles having physically adhered to the surface thereof at least a single metal layer coating of a co-deposited metal composition of nickel-cobalt-phosphorus.

2. The abrasive composition of claim 1 wherein the abrasive particles are cubic boron nitride or diamond.

## Patentansprüche

1. Schleifzusammensetzung, geeignet zum Einsatz in Schleifwerkzeugen, zusammengesetzt aus Schleifteilchen, an deren Oberfläche physikalisch mindestens ein einzelner Metallschicht-Überzug aus einer gemeinsam abgeschiedenen Metallzusammensetzung von Nickel-Cobalt-Phosphor haftet.

2. Schleifzusammensetzung nach Anspruch 1, worin die Schleifteilchen kubisches Bornitrid oder Diamant sind.

## Revendications

1. Composition abrasive, appropriée pour être employée dans des outils abrasifs constitués de particules abrasives à la surface desquelles adhère physiquement au moins une couche simple de revêtement métallique en une composition métallique co-déposée de nickel-cobalt-phosphore.

2. Composition abrasive conforme à la revendication 1, dans laquelle les particules abrasives sont du diamant ou du nitrure de bore cubique.
